# EUROPEAN PATENT SPECIFICATION

(11) **EP 0 798 184 B1**
(45) Date of publication and mention of the grant of the patent: **07.02.2001**
(21) Application number: 97301899.7
(22) Date of filing: 20.03.1997
(51) Int. Cl.: B60S 1/34

(54) **Drive head for a motor vehicle windscreen wiper**
Befestigungsteil für Kraftfahrzeug-Scheibenwischer
Tête d'entraînement pour essuie-glace de véhicule automobile

(30) Priority: 23.03.1996 GB 9606148
(43) Date of publication of application: 01.10.1997
(73) Proprietor: TRICO PRODUCTS CORPORATION, Buffalo, NY 14203-1298 (US)
(72) Inventor: Lewis, Mark Anthony, Caerphilly, Mid Glamorgan, CF8 3RG (GB); Robertson, Alistair Duncan, Aberdare, Mid Glamorgan, CF44 6RP (GB); Williams, Jeffrey Hugh, Cwmbran, Gwent, NP44 1EB (GB); Williams, Dennis, Lantwit Fardre, Mid Glamorgan, CF38 2EZ (GB); Pathmanathan, Mahesan, Cwmbran, Gwent, NP44 5TY (GB)
(74) Representative: James, Michael John Gwynne

(56) References cited:
- DE-A- 3 515 329
- DE-A- 3 926 714
- DE-A- 4 322 297
- DE-A- 4 331 602
- FR-A- 2 543 896
- FR-A- 2 550 147

## Description

The drive head of a windscreen wiper assembly is designed at one end to be mounted onto a drive shaft of a drive motor and at the other end to provide a pivotal mounting for a wiper arm, enabling the wiper arm to be lifted away from the windscreen for cleaning or maintenance. The connection of the drive shaft onto the head is by means of a DIN taper at the tip of the drive shaft which fits into a complementarily shaped recess in the head. The head is conventionally cast from metal and thus provides a very robust location for the tapered head of the drive shaft.

A windscreen wiper drive head shown in FR-A-2550147 is pressed from a sheet of metal to define a U-shaped cross-section forming two side walls extending from top edges to bottom edges of the drive head and for substantially the length of the head and a having a joining wall therebetween, a locating portion of the joining wall towards one end of the head being deformed to create a projection defining a passageway for receipt of a standard DIN tapered drive shaft head, which passageway tapers inwardly in the direction defined from the bottom edges to the top edges of the drive head, and the side walls being formed towards the other end of the head to define aligned bearing holes for receipt therein of a pivot of a wiper arm retainer.

In accordance with the invention the metal sheet is formed in such a way that the joining wall defines a top wall of the drive head between the top edges thereof and the projection extends upwardly from a portion of the top wall.

In one preferred arrangement a portion of the joining wall extends inwardly down between the side walls to define a recess and the projection comprises a continuation of the joining wall back up into and surrounded by said recess. With this design the pressed out tapered passageway forms a suitably robust mounting for the DIN tapered drive shaft head and the U-shaped cross-section of the metal head provides suitable strength.

Preferably the joining wall is deformed to create a longitudinal strengthening rib. This rib can also improve the styling of the drive head and provide an area for a Trade Mark or the like to be impressed. If desired the drive head can be shaped such that the U-shaped formation of the pressed metal sheet is also formed to define an angular shape from one end to the other and/or a sideways offset from one end to the other, and/or a twisted body shape.

It is preferred that the end of the joining wall at the end opposite to said one end of the head should be formed with a notch to allow for movement of a biassing spring or locating arm thereof,
as a wiper arm mounted on the drive head is pivoted relative to the drive head.

Ideally the end of the head opposite said one end incorporates a mounting slot to receive a hook at the end of a biassing spring, the slot being formed by cutting out part of a plate projecting from one of the side walls and folding back the cut material for the hook.

The invention may be performed in various ways and various embodiments will now be described, by way of example, with reference to the accompanying drawings, in which:-
Figure 1 is a plan view of a windscreen wiper drive head of this invention;
Figure 2 is an underneath plan view of the drive head of Figure 1;
Figure 3 is a cross-section through a portion of the drive head of Figures 1 and 2;
Figure 4 is a perspective view of a form of drive head an alternative form of drive head of the invention;
Figure 5 is a cross-section on the line A-A through part of the drive head of Figure 4;
Figures 6 and 7 are perspective and underneath plan views respectively of a third embodiment of the invention;
Figure 8 is a view on arrow B of Figure 7;
Figure 9 is a detail of a modified end section of a drive head of the invention;
Figures 10 and 11 are side and perspective plan views of a windscreen wiper drive head which does not pertain to the invention ;
Figure 12 shows a further example of the shape of a drive head of the invention; and
Figures 13 and 14 are perspective and underneath views respectively of yet another form of drive head of the invention.

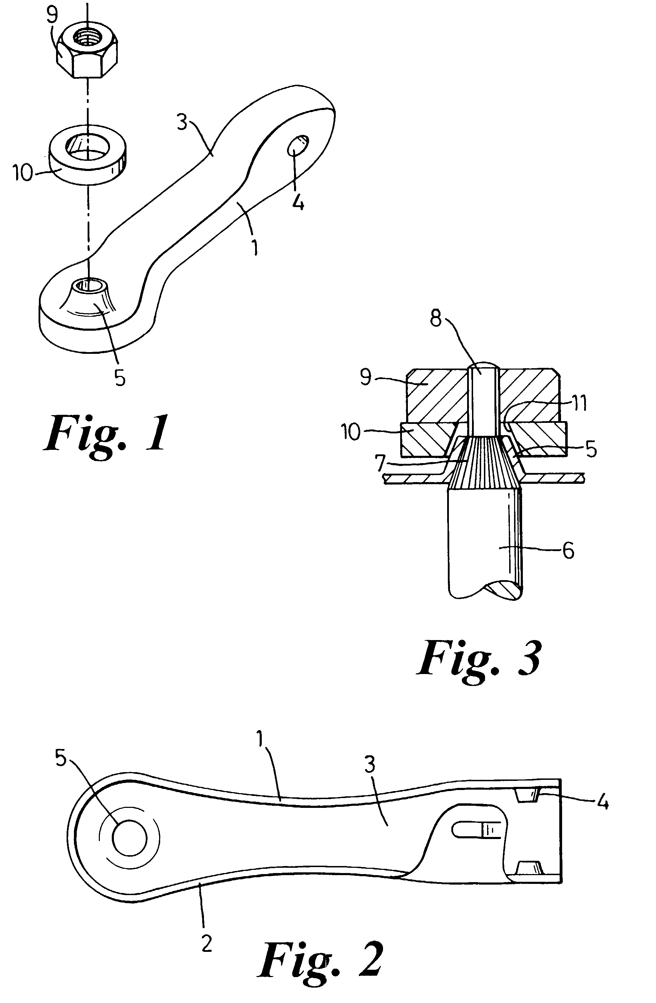

The drive head for a windscreen wiper assembly as shown in Figures 1 and 2 is pressed from sheet steel to define two side walls 1 and 2 and adjoining top wall 3. At one end holes 4 are provided in the side walls 1 and 2 to receive a pivot pin for a wiper arm retainer which will be located onto the drive head. At the other end the sheet metal is deformed to create a conical projection 5 which has a DIN taper equivalent to that of the head of a drive shaft from the windscreen wiper motor. The drive shaft 6 is shown in Figure 3 and has a splined conical drive head 7 and a screw threaded end 8. When the tapered head 7 is located into the projection 5, a nut 9 is screwed onto the threaded end 8 to drive a washer 10 into engagement with the projection 5 so as to lock the drive shaft 6 securely to the drive head. The washer 10 has a passageway 11 which is also formed to the same DIN taper as the head 7 and of the projection 5.

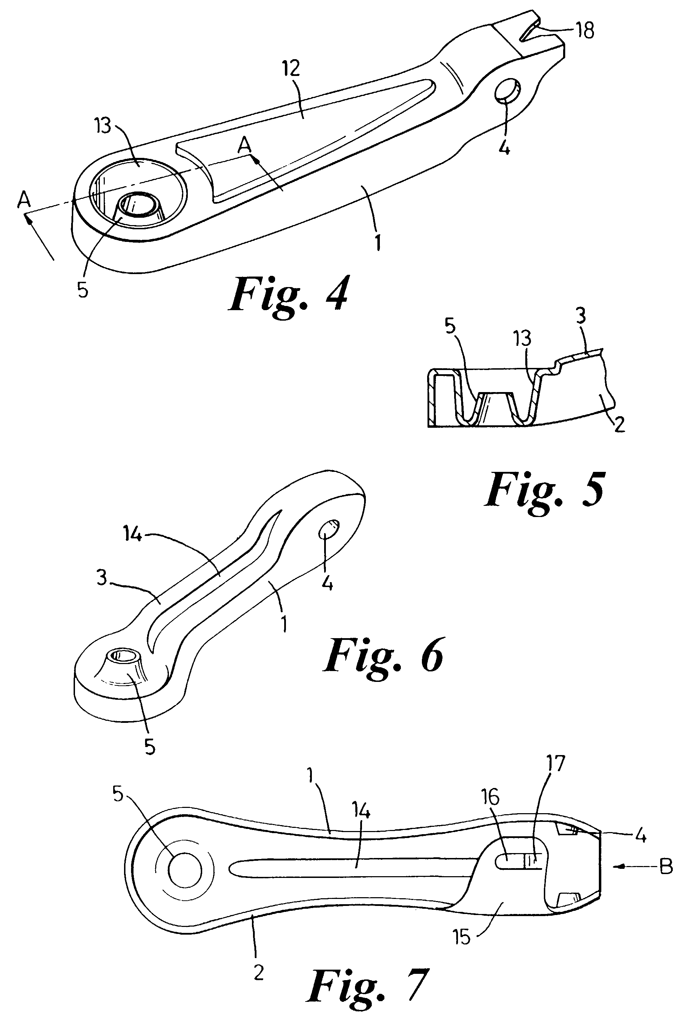

As shown in Figures 4 and 5 the drive head can be deformed to any desired shape and in particular can incorporate a longitudinal rib 12 which gives added strength to the structure. It also provides an area on which printed information, Trade Marks, etc can be impressed or stamped. In this version of drive head the projection 5 is located in a surrounding depression 13 so that the locating nut 9 will be hidden away.

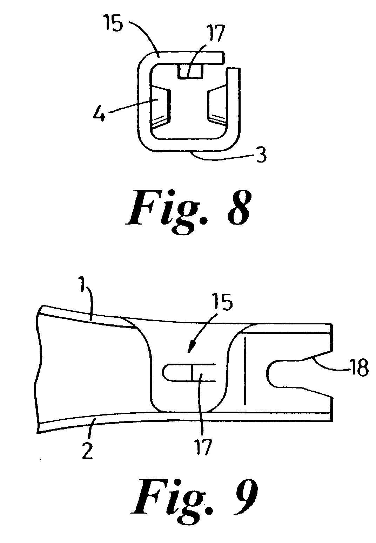

The embodiment shown in Figures 6 and 7 has a more pronounced upstanding rib 14 and the side walls 1 and 2 are of a generally sinuous shape for strength and pleasing appearance. In all the designs of drive head a shaped part 15 of the side wall 2 is bent over to form a locating plate to receive the end of a wiper arm retainer spring. A notch 16 is pressed out of the plate 15 and the pressed-out material is then folded back at 17 to provide a double thickness location (as can be seen in Figure 8) for the end of the spring. This resists tearing of the metal of the plate which might otherwise occur. As shown in Figure 4 a notch 18 is ideally formed at one end of the head. This will receive the end of the spring locating arm when the wiper arm retainer is pivoted up relative to the drive head. A suitable shape for the notch 18 is also shown in the arrangement for Figure 9. In this version also the plate 15 extends across from the side wall 1 to the side wall 2 so that it can rest on the side wall 2. Preferably however the plate 15 will stop short of the other side wall and the position of the plate relative to the pivot axis of the holes 4 allows for variability of the spring load. The loading characteristics also depend upon the position of the slot 16 in the plate 15 relative to the axis of the pivot holes 4.

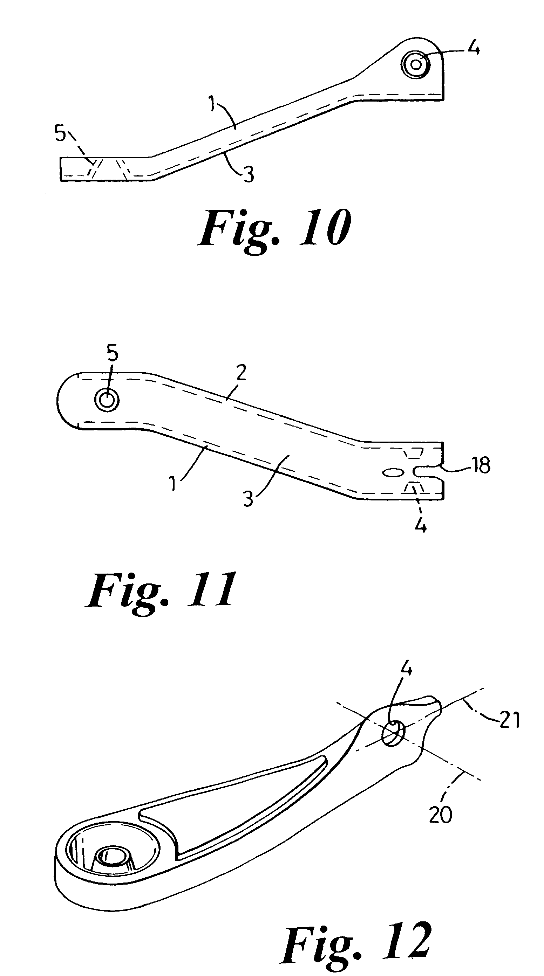

Figures 10 and 11 show the geometry for a drive head. Other variations in shape may be created in the pressed sheet including sideways offsetting from one end to the other, if desired. Figure 12 illustrates how the body of the drive head can be twisted so that the axis 20 of the pivot holes 4 is rotated about the centre line 21.

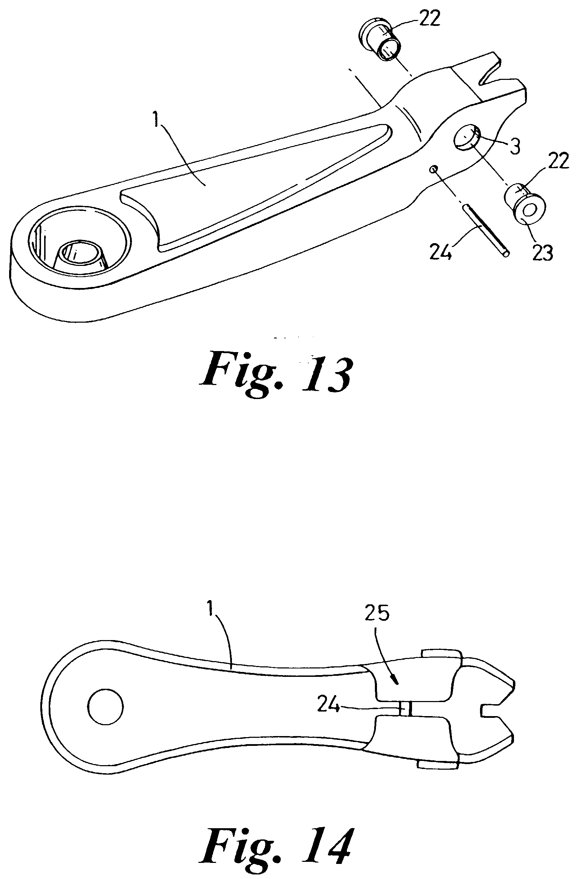

In the arrangement shown in Figures 13 and 14 the bearings mounting is provided by a pair of "top hat" bearings 22 which fit into the passageways 3. These bearings 22 provide the mounting for the pivot pin which will pass through the drive head 1 and a wiper arm which will be located outside the drive head 1. The enlarged heads 23 of the bearings 22 space the wiper arm away from the drive head 1 and thus prevent damage to paint work when the two parts move relative to one another. In this arrangement a locating pin 24 is provided for a hook at the end of a locating spring. The hook at the end of the spring will be held centrally by a pair of side wings 25 of the drive head 1.

## Claims

1. A windscreen wiper drive head pressed from a sheet of metal to define a U-shaped cross-section forming two side walls (1,2) extending from top edges to bottom edges of the drive head and for substantially the length of the head and having a joining wall (3) therebetween, a locating portion of the joining wall towards one end of the head being deformed to create a projection (5) defining a passageway, for receipt of a standard DIN tapered drive shaft head, which passageway tapers inwardly in the direction defined from the bottom edges to the top edges of the drive head, and the side walls being formed towards the other end of the head to define aligned bearing holes (4) for receipt therein of a pivot of a wiper arm retainer characterised in that the joining wall defines a top wall (3) of the drive head between the top edges thereof and the projection (5) extends upwardly from a portion of the top wall.

2. A wiper head according to Claim 1, wherein a portion (13) of the joining wall extends inwardly down between the side walls to define a recess and the projection (5) comprises a continuation of the joining wall back up into and surrounded by said recess.

3. A wiper head according to Claim 1 or Claim 2, wherein the joining wall is deformed to create a longitudinal strengthening rib (12).

4. A wiper head according to any one of Claims 1 to 3, wherein the U-shaped formation of the pressed metal sheet is also formed to define an angular shape from one end to the other and/or a sideways offset from one end to the other, and/or a twisted body shape.

5. A wiper head according to any one of Claims 1 to 4, wherein the joining wall at the other end opposite to said one end of the head is formed with a notch (18) to allow for movement of a biassing spring or locating arm thereof, as a wiper arm mounted on the drive head is pivoted relative to the drive head.

6. A wiper head according to any one of Claims 1 to 5, wherein the end of the head opposite to said one end incorporates a mounting slot (16) to receive a hook at the end of a biassing spring, the slot being formed by cutting out part of a plate projecting from one of the side walls and folding back the cut material below the plate to create a robust location bearing point (17) for the hook.

## Patentansprüche

1. Antriebsseitiges Befestigungsteil für einen Scheibenwischer, welches im Querschnitt U-förmig aus einem Metallblech gepreßt ist, wobei das Befestigungsteil zwei Seitenwandungen (1, 2) aufweist, welche sich im wesentlichen über die gesamte Länge des Befestigungsteils von Oberkanten zu Unterkanten desselben erstrecken, wobei eine die Seitenwandungen (1, 2) verbindende Wandung (3) ausgebildet ist, welche einen Befestigungsabschnitt mit einer eine Durchführung ausbildenden konischen Erhebung (5) derart aufweist, daß die Durchführung zur Aufnahme eines Standard-DIN-Kopfes einer Antriebswelle geeignet ist, wobei sich der Durchgang von den Unterkanten in Richtung Oberkanten des Befestigungsteils verjüngt, wobei ferner die Seitenwände (1, 2) an einem bzgl. der Durchführung gegenüberliegenden Ende des Befestigungsteils derart ausgebildet sind, daß diese miteinander fluchtende Lageröffnungen (4) zur Aufnahme eines Schwenkzapfens eines Wischarmhalters ausbilden,
**dadurch gekennzeichnet,**
daß die verbindende Wandung (3) eine Oberseite des Befestigungsteils zwischen den Oberkanten desselben ausbildet und daß sich die Erhebung (5) von einem Abschnitt der Oberseite aufwärts erstreckt.

2. Befestigungsteil gemäß Anspruch 1, dadurch gekennzeichnet, daß sich ein Abschnitt (13) der verbindenden Wandung einwärts und abwärts zwischen den Seitenwandungen derart erstreckt, daß eine Vertiefung ausbildet ist, wobei die Erhebung (5) eine Fortsetzung der verbindenden Wandung derart aufweist, daß die Erhebung (5) in die Ausnehmung zurück versetzt und von dieser umgeben ist.

3. Befestigungsteil gemäß Anspruch 1 oder 2, dadurch gekennzeichnet, daß die verbindende Wand derart deformiert ist, daß diese eine sich in Längsrichtung erstreckende Verstärkungsrippe (12) ausbildet.

4. Befestigungsteil gemäß wenigstens einem der Ansprüche 1 bis 3, dadurch gekennzeichnet, daß die U-förmige Ausbildung des gepreßten Metallbleches ferner von einem Ende zum anderen Ende abgewinkelt und/oder seitlich versetzt und/oder in sich verdreht ist.

5. Befestigungsteil gemäß wenigstens einem der Ansprüche 1 bis 4, dadurch gekennzeichnet, daß die verbindende Wandung an einem bzgl. des Befestigungsabschnittes gegenüberliegenden Ende eine Kerbe (18) aufweist, welche einer Vorspannfeder oder einem Befestigungsarm einen Bewegungsspielraum zur Verfügung stellt, wenn ein Wischerarm schwenkbar mit dem Befestigungsteil verbunden ist.

6. Befestigungsteil gemäß wenigstens einem der Ansprüche 1 bis 5, dadurch gekennzeichnet, daß ein Ende des Befestigungsteils einen Befestigungsschlitz (16) aufweist, welcher zur Aufnahme eines Hakens am Ende einer Vorspannfeder ausgebildet ist, wobei der Schlitz durch herausschneiden eines Teiles einer Platte, die sich von einer der Seitenwände erhebt, und durch zurückfalten des herausgeschnittenen Materials unter die Platte hergestellt ist, so daß sich ein mechanisch stabiler Lagerpunkt (17) für den Haken ergibt.

## Revendications

1. Tête d'entraînement d'essuie-glace emboutie à la presse à partir d'une feuille de métal pour définir une section transversale en U formant deux parois latérales (1, 2) s'étendant des bordures supérieures aux bordures inférieures de la tête d'entraînement et sur sensiblement la longueur de la tête et ayant une paroi de jonction (3) entre les deux, une partie de positionnement de la paroi de jonction vers l'une des extrémités de la tête étant déformée pour créer une projection (5) définissant un passage, en vue de la réception d'une tête d'arbre d'entraînement conique norme DIN, lequel passage s'effile vers l'intérieur dans la direction définie des bordures inférieures aux bordures supérieures de la tête d'entraînement, et les parois latérales étant formées vers l'autre extrémité de la tête pour définir des trous de palier alignés (4) en vue de la réception dans ceux-ci d'un pivot d'un organe de retenue d'un bras d'essuie-glace, caractérisée par le fait que la paroi de jonction définit une paroi supérieure (3) de la tête d'entraînement entre les bordures supérieures de celle-ci et la projection (5) s'étend vers le haut à partir d'une partie de la paroi supérieure.

2. Tête d'essuie-glace selon la revendication 1, dans laquelle une partie (13) de la paroi de jonction s'étend vers l'intérieur et vers le bas entre les parois latérales afin de définir une cavité et la projection (5) comprend une continuation de la paroi de jonction en retour vers le haut dans et entourée par ladite cavité.

3. Tête d'essuie-glace selon la revendication 1 ou la revendication 2, dans laquelle la paroi de jonction est déformée pour créer une nervure longitudinale de renforcement (12).

4. Tête d'essuie-glace selon l'une quelconque des revendications 1 à 3, dans laquelle la formation en U de la feuille de métal emboutie à la presse est également formée pour définir une forme angulaire d'une extrémité à l'autre et/ou un décalage latéral d'une extrémité à l'autre, et/ou une forme de corps torsadée.

5. Tête d'essuie-glace selon l'une quelconque des revendications 1 à 4, dans laquelle la paroi de jonction au niveau de l'autre extrémité opposée à ladite première extrémité de la tête comporte une encoche (18) pour permettre le mouvement d'un ressort de sollicitation ou d'un bras de positionnement de celui-ci, alors qu'un bras d'essuie-glace monté sur la tête d'entraînement est amené à pivoter par rapport à la tête d'entraînement.

6. Tête d'essuie-glace selon l'une quelconque des revendications 1 à 5, dans laquelle l'extrémité de la tête opposée à ladite première extrémité incorpore une fente de montage (16) pour recevoir un crochet à l'extrémité d'un ressort de sollicitation, la fente étant formée par découpe d'une partie d'une plaque se projetant à partir de l'une des parois latérales et repliage du matériau découpé au-dessous de la plaque pour créer un point de support de positionnement robuste (17) pour le crochet.
